# EUROPEAN PATENT APPLICATION

(11) **EP 1 467 372 A1**
(43) Date of publication of application: **13.10.2004**
(21) Application number: 04076081.1
(22) Date of filing: 07.04.2004
(51) Int. Cl.: G11B 27/10, G11B 27/32, G11B 27/34, G11B 19/02

(54) **Method for alphabetizing and fast track searching MP3 compact disc file structure contents in a vehicle audio system**

(30) Priority: 09.04.2003 US 409725
(71) Applicant: Delphi Technologies, Inc., Troy, MI 48007 (US)
(72) Inventor: Lee, Long K., Brookfield, WI 53045 (US); Toms, Mona L., Carmel, IN 46032 (US); Thai, Hung D., Carmel, IN 46033 (US); McComas, Kathryn A., Kokomo, IN 46901 (US); Michell, Gary K., Kokomo, IN 46901 (US)
(74) Representative: Denton, Michael John

(57) **Abstract**

A vehicle audio system (20) is provided that includes an audio receiver (22) having a radio tuner (23) and random access media reader (24) capable of accessing audio data files such as those stored on a compact disc. The audio system (20) includes a switch (42, 142) selectively operable in at least two modes, the switch operable in a first mode for tuning the radio tuner (23), and operable in a second mode for fast track searching and selecting for playback one of the audio data files. The audio system (20) also includes software enabling a processor (26) to read the filenames of the audio data files stored on a compact disc, sort the filenames into an alphabetical index (172), and display and access the audio data files in the order of the alphabetical index.

## Description

### TECHNICAL BACKGROUND

The present invention relates to a vehicle audio system having a compact disc player.

### BACKGROUND OF THE INVENTION

Audio systems having compact disc (CD) players have become commonplace in vehicles. CDs generally have individual "tracks" or digital audio data files that can be processed for playback of a recording stored in the data file.

Audio CDs conventionally include up to fifteen tracks available for playback. An audio system user may select from the various tracks by using pushbuttons on the audio system user interface. Viewing a display of the track name or number and using the pushbuttons to step between tracks is generally sufficient to select a user's track of choice from the low number of tracks available on a conventional audio CD. However, the introduction of compressed audio data file formats, such as MP3, on a data CD now allows such data CDs to have 200 or more different tracks.

Audio data file formats may also contain display and searching information stored in each audio data file in addition to the compressed sound recording. For example, MP3 files may include ID3 tags which contain informational text associated with the audio data file, such as track or song name. However, even with such information, using pushbuttons can be extremely cumbersome for a user to locate a particular desired audio data file for playback from among over 200 tracks.

In addition to supporting a growing number of audio and other data files on a single CD, data CD formats generally organize the audio data files into groups stored in folders or playlists. For example, audio data files may be grouped into folders that each relate to a particular artist, album, genre, or other characteristic of the particular recordings stored in the audio data files stored in each folder. Additionally, playlists are used to organize a group of audio data files into a preferred playback order.

One prior known audio player utilizes the audio system volume control to selectively step through the available audio data files on a CD. However, another switch must first be actuated to disable the volume control function each time the user desires the volume control switch to function as a selector for stepping through audio data files. Thus, multiple user actions are required, and, for a period of time after activation, the audio player volume control switch is not available to adjust the playback volume.

### SUMMARY OF THE INVENTION

The present invention addresses some of the above-noted limitations of audio systems, particularly vehicle audio systems, by providing an audio system including an audio receiver having a radio tuner, a random access media reader adapted to access audio data files stored on removable random access media, such as an audio or data CD, a processor, and a switch with two modes. The first mode of the switch for tuning the radio and a second mode operable for rapidly selecting for playback one of the audio data files. The present invention also generates an index of the available audio data files sorted in alphabetical order by filename or track name.

The user interface includes a display and various user input devices. The display is capable of displaying information related to a selected audio data file, such as the track number and the track name or filename. The user input devices include a TUNE switch that is selectively operable in at least two modes.

The first mode is operable for tuning the radio tuner when the radio is in use. The second mode, "fast track," is operable for stepping the selection from one of the audio data files to another one of the audio data files when the random access media reader is in use.

When the random access media reader is in use, the TUNE switch is automatically operable to step between the audio data files. Clockwise rotation of the TUNE switch will repeatedly step the selection to the next audio data file, and counterclockwise rotation of the TUNE switch will repeatedly step the selection to the previous audio data file. As each audio data file is selected, information related to the selected audio data file is displayed. Upon cessation of movement of the TUNE switch for greater than a preset period of time, playback of the selected audio data file begins.

The audio data files available for playback are generally stored on a random access media (such as a data CD) in groups, such as playlists and folders. Specifically, the media may include several playlists, each playlist including a plurality of audio data files or, more typically, audio data file pointers. Each folder may include a plurality of audio data files as well as subfolders.

The user interface also includes a FOLDER UP switch and a FOLDER DOWN switch each having two modes. The first mode of the switches for selecting a radio tuner preset and the second mode for stepping the selection between the various folders and playlists. In the second mode, the FOLDER UP and FOLDER DOWN switches first step the selection between the available playlists, and then step the selection between the available folders.

In order to provide the user with a rapid way to find an audio data file by filename or track name, the processor is capable of generating an alphabetical index of all of the audio data files stored on an audio or data CD. Thus, an audio data file can be quickly found by name in alphabetical sequence without regard to the particular folder or playlist that the audio data file is stored in on the CD. Selection of the alphabetized index is initiated by pressing a single user input switch. Stepping the selection between the various alphabetized audio data filenames may be provided by using the TUNE switch or the FOLDER UP/DOWN pushbuttons. Playback of the selected audio data file begins upon cessation of movement of the TUNE switch and FOLDER UP/DOWN pushbuttons.

In one form of the invention, an audio system is provided including an audio receiver having a radio tuner, a processor coupled to the audio receiver, a random access media reader coupled to the processor, the processor having software enabling access to audio data files stored on a removable random access media, and a first switch selectively operable in at least two modes, the first switch operable in a first mode for tuning the radio receiver and operable in a second mode for selecting for playback one of the audio data files.

In another form thereof, a method is provided for selecting an audio data file in an audio system having an audio receiver, and a random access media reader capable of accessing a plurality of data files stored on random access media, the steps including enabling a switch upon operation of the random access media reader to be operable for selecting one of the plurality of audio data files, actuating the switch to select one of the plurality of audio data files, and playing the selected one of the plurality of audio data files.

In yet another form thereof, an audio system is provided having a processor, a user interface coupled to the processor, an audio receiver having a radio tuner, a random access media reader coupled to the processor, and software enabling the processor to access audio data files and, upon operation of the random access media reader, enable a switch for user selection of one of the audio data files, and upon operation of the radio tuner, enable a switch for user selection relating to the radio tuner.

In another form thereof, an audio system is provided including a processor, an audio receiver having a radio tuner coupled to the processor, a random access media reader coupled to the processor and adapted for accessing audio data files, a processor, data storage, and software enabling the processor to receive at least one of the filenames and track names of all the audio data files stored on a removable random access memory, sort one of the filenames and track names into an alphabetical index stored in data storage, and display and access the audio data files in the order of the alphabetical index.

In yet another form thereof, a method is provided for navigating the audio data files stored on removable random access media in an audio system which includes an audio receiver having a radio tuner, and an audio player capable of receiving and playing the audio data files, the method including the steps of reading at least one of the filenames and track names of all the audio data files stored on the media, sorting and storing at least one of the filenames and track names in an alphabetical index, and displaying and accessing the audio data files in order of the alphabetical index.

Advantageously, the present invention provides an audio system that automatically switches the TUNE switch to a fast track search mode of operation whenever the random access media reader is in use or selected. The user may therefore rapidly step between audio data files and view the selected track name or filename to select a desired audio data file for playback.

Another advantage of the present invention is that playback of the selected audio data file automatically begins after cessation of movement of the TUNE switch for a preset period of time when the random access media reader is in use.

A further advantage of the present invention is that a single user input provides a searchable alphabetical index of all audio data files available on the CD. The alphabetical index may be sorted in order of filename or track name, regardless of the folder or playlist in which the audio data file is located. Therefore, the user may quickly locate an audio data file by name without having to know the folder or playlist location for the audio data file.

### BRIEF DESCRIPTION OF THE DRAWINGS

The present invention will now be described, by way of example, with reference to the accompanying drawings, in which:
Fig. 1 is a perspective view of an exemplary embodiment of the audio system according to the present invention and installed in the dash of a vehicle;
Fig. 2 is a schematic block diagram of the audio system shown in Fig. 1;
Fig. 3 is a plan view of a first exemplary embodiment of the user interface of the audio system shown in Fig. 2;
Figs. 4A - 4F are plan views of the display portion of the user interface shown in Fig. 3;
Fig. 5 is a plan view of a second exemplary embodiment of the user interface of the audio system shown in Fig. 2;
Figs. 6A - 6F are plan views of the display portion of the user interface shown in Fig. 5;
Fig. 7 is a plan view of an exemplary data structure of a first data CD;
Figs. 8A - 8C comprise a flowchart diagram illustrating the steps for selecting an audio data file according to the present invention;
Fig. 9 is a plan view of an exemplary data structure for a second data CD;
Fig. 10 is a table illustrating the data structure for an alphabetical index of an audio system according to the present invention; and
Fig. 11 is a flowchart diagram illustrating the steps for navigating an index of audio data files available for playback in an audio system according to the present invention.

Corresponding reference characters indicate corresponding parts throughout the several views. Although the drawings represent embodiments of the present invention, the drawings are not necessarily to scale and certain features may be exaggerated in order to better illustrate and explain the present invention. The exemplifications set out herein illustrate embodiments of the invention and such exemplifications are not to be construed as limiting the scope of the invention in any manner.

### DESCRIPTION OF INVENTION

The embodiments disclosed below are not intended to be exhaustive or limit the invention to the precise forms disclosed in the following detailed description. Rather, the embodiments are chosen and described so that others skilled in the art may utilize their teachings.

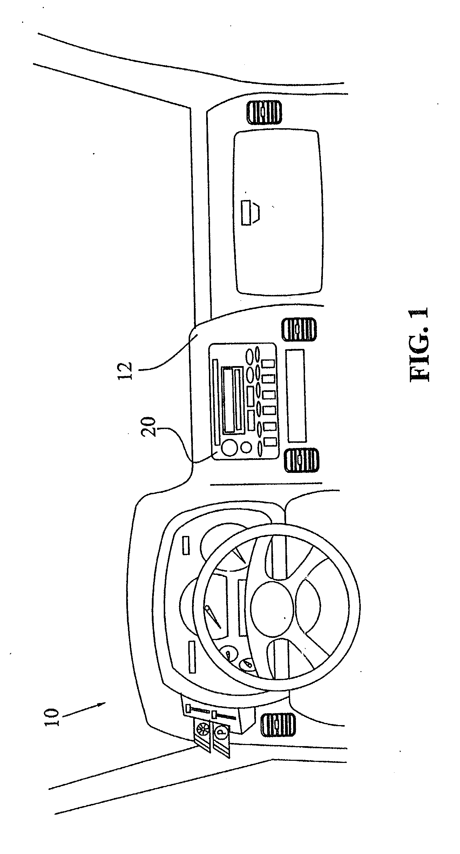

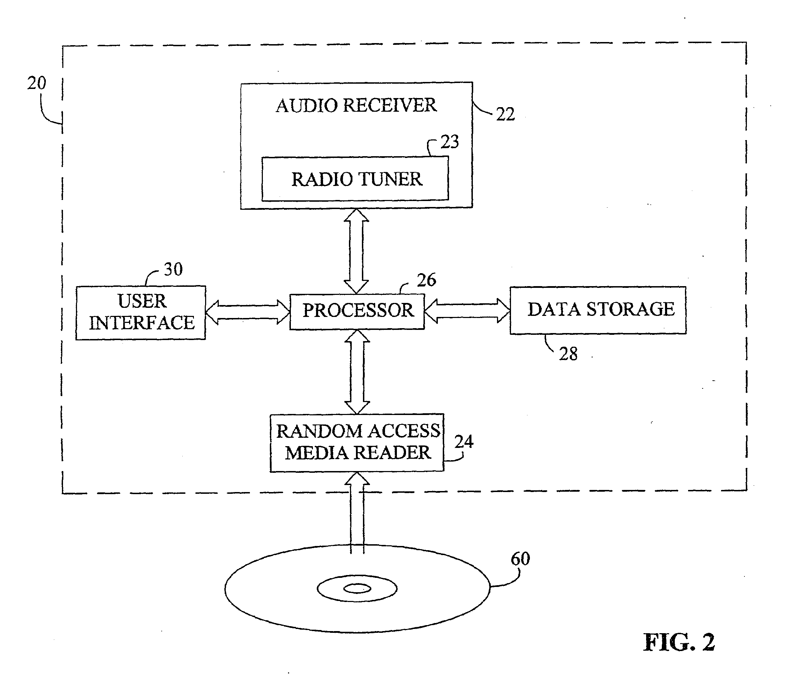

Fig. 1 shows a portion of the interior passenger compartment of vehicle 10 having an exemplary embodiment of audio system 20 installed in dash 12. Referring to Fig. 2, audio system 20 may include audio receiver 22, radio tuner 23, random access media reader 24, data storage 28, and user interface 30 coupled to processor 26. Random access media reader 24 is capable of releasably receiving random access media, such as audio or data CD 60, for example.

Processor 26 may be a single processor, multiple processors, a component of random access media reader 24, or a component of audio receiver 22. Similarly, radio tuner 23 may be a part of audio receiver 22 or may be a separate component coupled to audio receiver 22.

Random access media reader 24 is adapted for accessing audio data files stored on CD 60. CD 60 may be a standard audio CD, such as those containing CDA format files, or a data CD, such as those having compressed audio data files, for example, MP3 format files. Other random access media and readers may also be used, for example, DVD, mini-disc, PCMCIA, etc.

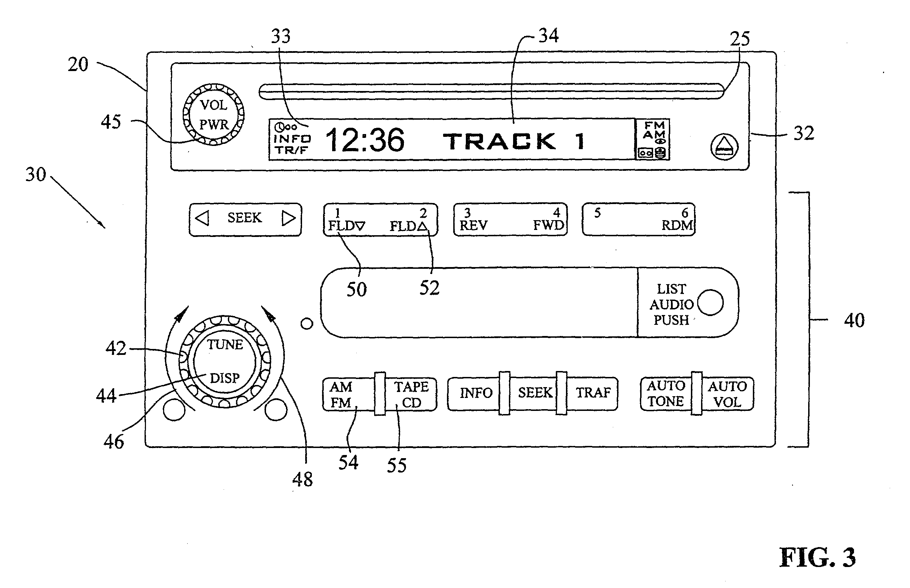

Fig. 3 shows a first exemplary embodiment of user interface 30 of audio system 20. User interface 30 generally includes CD receiving slot 25, display 32, and various user input devices 40. Display 32 may include first display area 33 and second display area 34. Input devices 40 include TUNE switch 42, DISPLAY switch 44, VOLUME switch 45, FOLDER DOWN pushbutton 50, FOLDER UP pushbutton 52, RADIO pushbutton 54, and CD pushbutton 55.

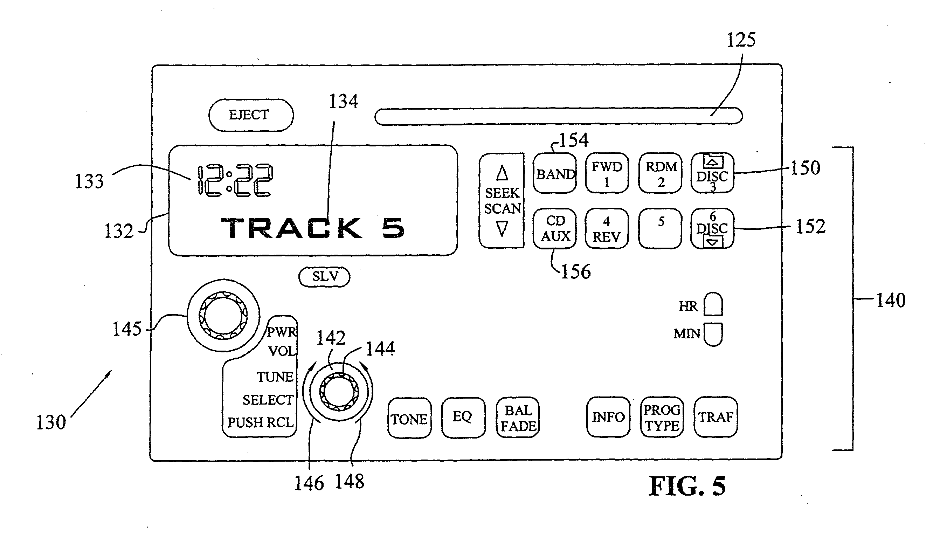

Fig. 5 shows a second exemplary embodiment of user interface 130 of audio system 20. User interface 130 generally includes CD receiving slot 125, display 132, and user input devices 140. Display 132 may include first display area 133 and second display area 134. Input devices 140 include TUNE switch 142, RCL switch 144, VOLUME switch 145, FOLDER DOWN pushbutton 150, FOLDER UP pushbutton 152, RADIO pushbutton 154, and CD pushbutton 156.

Audio system 20 has two modes of operation. A first mode, selected by actuating RADIO pushbutton 54, 154 which activates radio tuner 23, deactivates random access media reader 24, and sets TUNE switch 42, 142, FOLDER DOWN pushbutton 50, 150, and FOLDER UP pushbutton 52, 152 to the first mode of operation. In the first mode, TUNE switch 42, 142, FOLDER DOWN pushbutton 50, 150, and FOLDER UP pushbutton 52, 152 are operable for tuning radio tuner 23, which then provides an audio signal to audio receiver 22. A second mode of operation is selected by actuating CD pushbutton 55, 155 and is operable for activating random access media reader 24, deactivating radio tuner 23, and setting TUNE switch 42, 142, FOLDER DOWN pushbutton 50, 150 and FOLDER UP pushbutton 52, 152 to the second mode of operation. In the second mode, TUNE switch 42, 142 is operable for stepping between available audio data files and initiating playback of a selected audio data file, and FOLDER DOWN pushbutton 50, 150 and FOLDER UP pushbutton 52, 152 are operable for stepping the selection between the various folders and playlists.

Upon activation of random access media reader 24 by pressing CD pushbutton 55, 155, inserting CD 60 into receiving slot 25, 125, or other suitable activation method, display 32, 132 will display information relating to the audio data files available on CD 60 for playback by audio system 20. For example, displays 32, 132 display information regarding the currently selected audio data file or "track. "

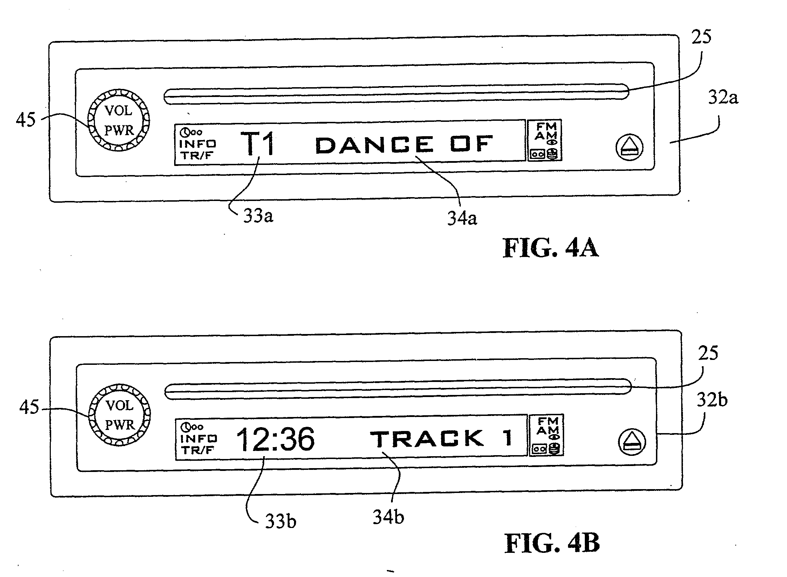

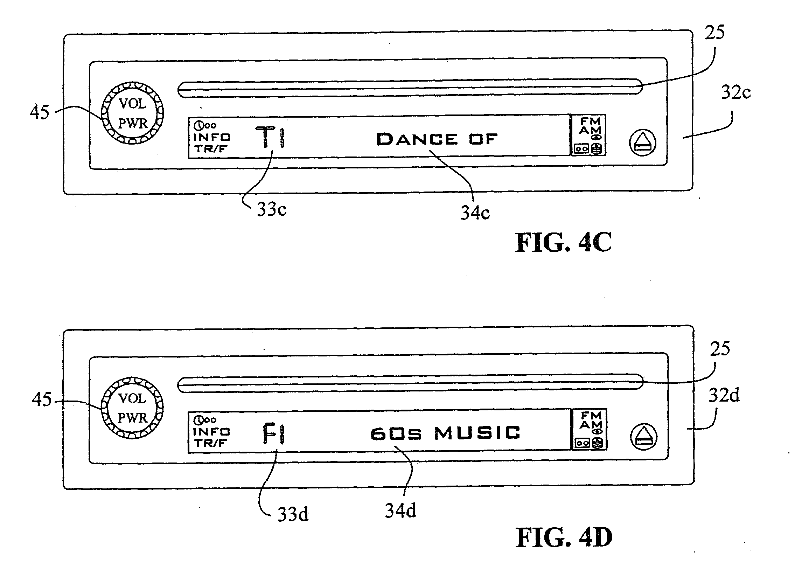

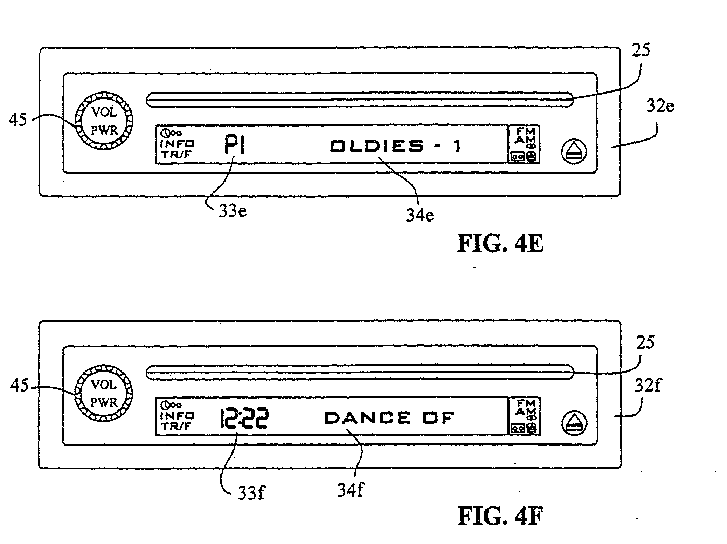

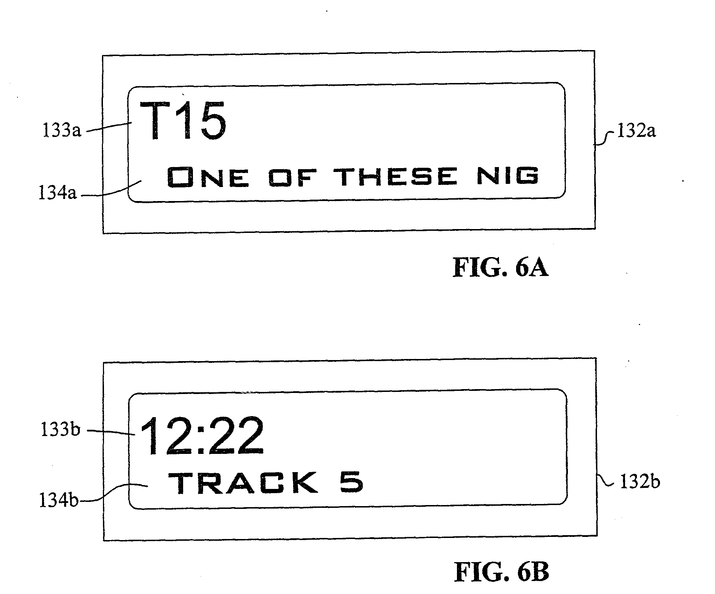

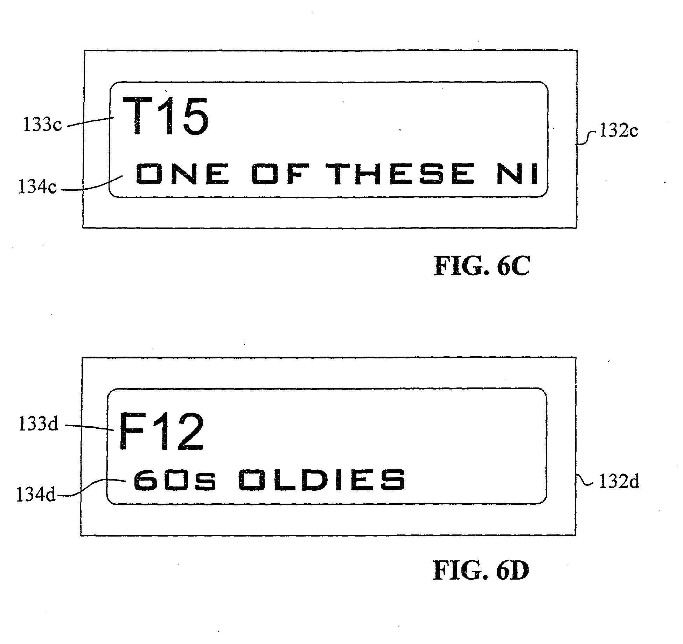

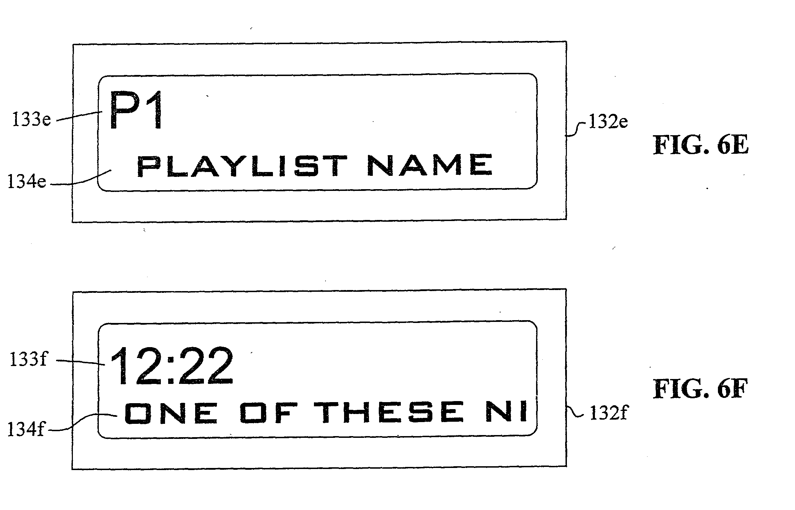

Referring to Fig. 4A, if CD 60 is a data CD, such as one having files with an MP3 format, display 32A may display the letter T followed by a track number in display area 33a and a filename or first portion of a filename in display area 34a. For example, as shown in Fig. 4A, the first available audio data file on CD 60 is track 1, displayed as "T1" in first display area 33a, and has a first portion of the filename of track 1, "DANCE OF", shown in second display area 34a. If the filename includes an extension, such as ".mp3", only the portion of the filename preceding the extension will be displayed. Alternatively, second display area 34a may be used to display a track name, such as is stored in an ID3 tag field in an MP3 audio data file. As shown in Fig. 6A, display 132a of the second exemplary embodiment of user interface 130 also shows a track number in first display area 133a and filename or track name in second display area 134a.

Referring to Fig. 4B, if CD 60 is a standard audio CD, such as those having CDA format audio data files, display 32b may display the time of day in first display area 33b and the word "track" followed by the track number of the currently selected audio data file in second display area 34b. Similarly, as shown in Fig. 6B, the second exemplary embodiment of user interface 130 includes display area 132b showing the time of day in first display area 133b and the track number in second display area 133b.

The display formats shown in Figs. 4A, 4B, 6A, and 6B are exemplary only. Other display formats displaying the same or other information or labels related to the audio data files may also be used. For example, the formats shown in Figs. 4C-4F and 6C-6F.

When random access media reader 24 has been selected by actuating CD pushbutton 55 or by inserting CD 60 into receiving slot 25, thereby coupling CD 60 with random access media reader 24, TUNE switch 42, 142 is in a second mode of operation and is operable for fast track searching of the available audio data files stored on CD 60. To locate and access an audio data file, the user may rotate TUNE switch 42, 142 clockwise 46, 146 to step to the next available audio data file, or counterclockwise 48, 148 to step to the previous available audio data file. As TUNE switch 42, 142 is rotated and the current selection of audio data file or CD 60 changes, display 32, 132 is updated with the track number and filename or track name of the newly selected audio data file.

When TUNE switch 42, 142 is released or movement ceases for more than a preset duration, such as 2 seconds, playback of the currently selected audio data file begins. If TUNE switch 42. 142 is again rotated, display and selection of the current audio data file again changes. Although the exemplary embodiment utilizes rotation of a rotary switch, movement or actuation of other types of switches or sensors may also be used.

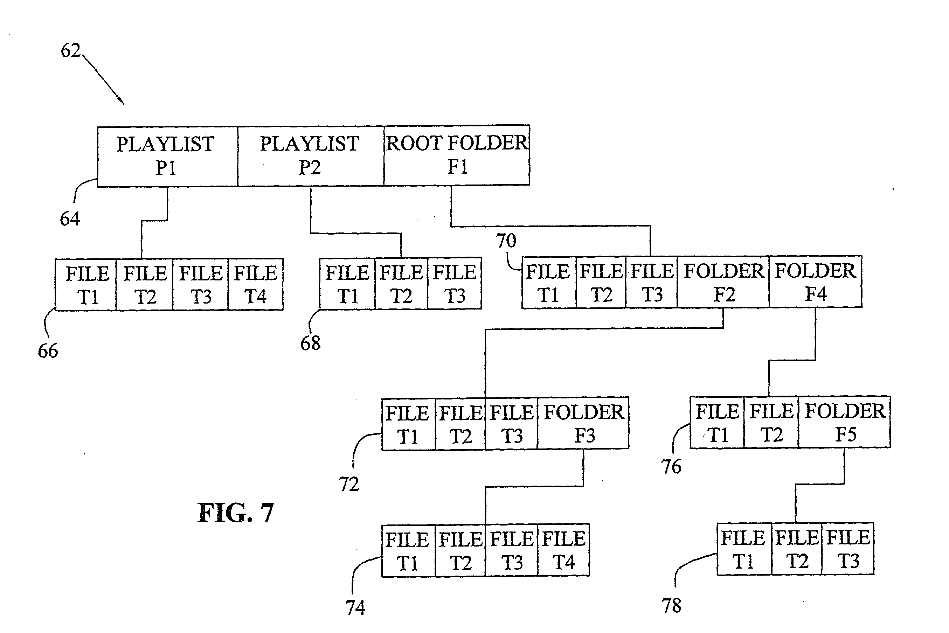

Referring now to Fig. 7, an exemplary data structure of first data CD 62 is shown, first data CD 62 includes root directory 64 having playlist P1, playlist P2, and folder F1. Playlist P1 includes four audio data files 66. Playlist P2 includes three audio data files 68. Folder F1 includes three audio data files 70 and folder F2 and folder F4. Thus, folders F2 and F4 are subfolders of folder F1. Folder F2 includes three audio data files 72 and subfolder F3, which includes four audio data files 74. Folder F4 includes two audio data files 76, and subfolder F5, which includes three audio data files 78. The data structure may include any number of audio data files, playlists, and folders. For example, CD 62 could have zero playlists or only Folder F1, which includes the audio data files stored in the root directory.

Data structures such as that shown in Fig. 7 may be created by software applications such as WinAmp™, MusicMatch™, and RealJukebox™. Playlists T1 and T2 each provide a list of audio data files, or, more specifically, audio data file pointers or directory locations for audio tracks that are sequentially played back when the user selects the playlist. Folders F1-F5 provide a structure for organizing related audio data files by grouping the files into folders that each relate to a particular artist, album, genre, or other characteristic of the recording stored in the audio data files.

Upon activating random access media reader 24 by actuating pushbutton 55, 155, TUNE switch 42, 142 is operable in the second mode for providing fast track searching of the audio data files in either the playlists or folders of audio data CD 62. In the exemplary embodiment of audio system 20, random access media reader 24 may, upon activation, first select track T1 of playlist P1 for display and playback. Thus, display 32, 132 displays the track number and the filename or track name of that audio data file, as shown in Figs. 4A and 6A. Rotation of TUNE switch 42, 142 clockwise 46 will repeatedly select another track in the forward sequence of playlist P1.

Referring to Fig. 7, audio data files 66 are sequentially selected as TUNE switch 42, 142 is rotated in a clockwise direction such that track T1, followed by track T2, followed by track T3, and followed by track T4, are sequentially displayed and selected. If the user continues to rotate TUNE switch 42, 142 clockwise 46, 146 after reaching the last audio data file in playlist P1, *i.e.,* track T4, the next audio data file to be displayed and selected will be the first audio data file, track T1, in the next playlist, playlist P2. Similarly, audio data files 68 and playlist P2 will be sequentially displayed and selected as the user continues to rotate TUNE switch 42, 142 in a clockwise direction. Clockwise rotation 46, 146 of TUNE switch 42, 142 upon selection of the last audio data file in the last playlist, *i.e*., track T3 of playlist P2, will result in the selection of the first audio data file in the first playlist, *i.e.*, track T1 of playlist P1.

For quick access of previous audio data files, fast track search is provided by counterclockwise rotation 48, 148 of TUNE switch 42, 142. The sequence of selecting and displaying audio data files associated with the playlists is analogous but reverse to the sequence used for clockwise rotation 46, 146 of TUNE switch 42, 142. For example, if track T1 of playlist P1 is currently displayed and selected and TUNE switch 42, 142 is rotated counterclockwise 48, 148, the last audio data file and the last playlist will be displayed and selected, *i.e.,* track T3 in playlist P2. If the user continues to rotate TUNE switch 42, 142 counterclockwise 48, 148, audio data files 68 and playlist P2 are sequentially displayed and selected in reverse order and then audio data files 66 in playlist P1 are sequentially displayed and selected in reverse order.

Upon cessation of movement of TUNE switch 42 for a preset duration of time, for example, 2 seconds, random access media reader 24 will initiate playback of the current displayed and selected audio data file. The second exemplary embodiment of user interface 130 includes TUNE switch 142 which may function identically to TUNE switch 42 as it is rotated clockwise 146 and counterclockwise 148.

Referring again to Fig. 3, first embodiment of user interface 30 also includes FOLDER DOWN pushbutton 50 and FOLDER UP pushbutton 52 for stepping the selection of playlists and folders. For example, if the current selection is an audio data file in playlist P1, pressing FOLDER UP pushbutton 52 selects and displays track T1 of playlist P2. If playlist P2 is the last playlist in data CD 62, pressing FOLDER UP pushbutton 52 again will select track T1 in folder F1. Additional activations of FOLDER UP pushbutton 52 will continue to select the first track of the next folder until after the last folder, *i.e*., folder F5, is selected. After the last folder is selected and FOLDER UP pushbutton 52 is again actuated, track T1 of playlist P1 will be selected and display, thus wrapping around not to the first folder F1 but to the first playlist P1. Operation of FOLDER DOWN pushbutton 50 is analogous but in reverse order to FOLDER UP pushbutton 52. For example, actuating FOLDER DOWN pushbutton 50 will select the previous playlist, wrap to the first folder F1, or wrap from the first folder F1 to the first playlist P1. FOLDER UP pushbutton 152 and FOLDER DOWN pushbutton 150 of the second embodiment of user interface 130 may function identical to FOLDER UP pushbutton 52 and FOLDER DOWN pushbutton 50, respectively.

In order to indicate transitions between the various playlists or between the various folders, an audible signal or visual display may be provided whenever user actuation of input devices 40, 140 steps the selection between the playlists or between the folders. Such an indication may be implemented only when fast track searching is used or alternatively may also be implemented when the FOLDER UP/DOWN pushbuttons 50, 150, 52, 152 are actuated.

TUNE switch 42, 142 and/or FOLDER UP/DOWN 50, 150, 52, 152 pushbuttons may also be operable for stepping between audio data files stored on a standard audio CD, such as those having audio data files in a CDA format. However, with standard audio CDs, song titles may be unavailable and therefore audio system 20 may only display track numbers, for example, as shown in Figs. 4B and 6B.

The present invention also includes a method for selecting an audio data file in audio system 20. In the exemplary embodiment, the method is executed by software in processor 26. However, the method may alternatively be implemented by the hardware design of the electronics or a combination of hardware and software.

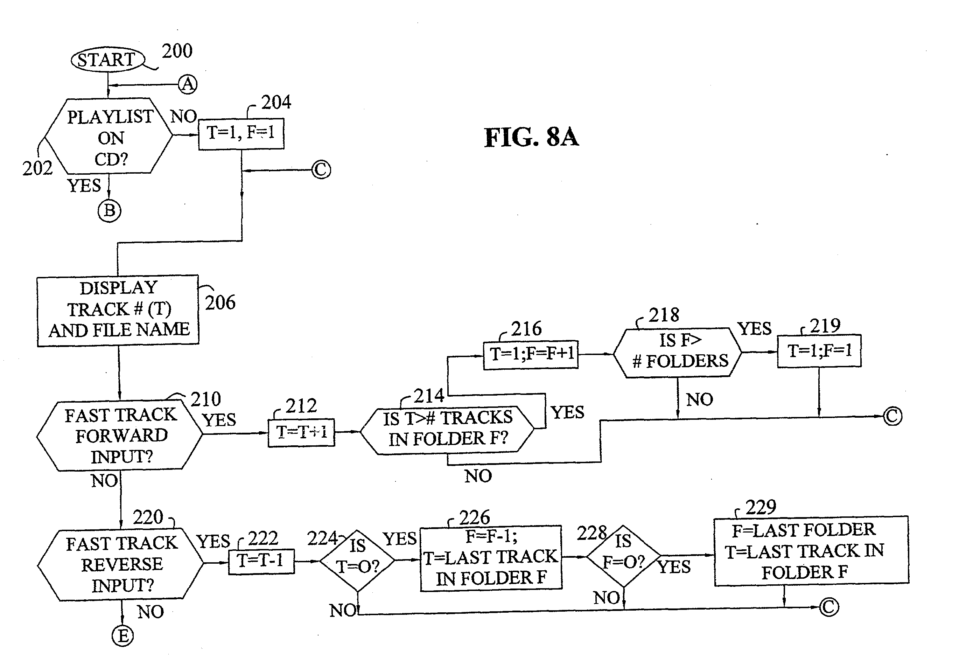

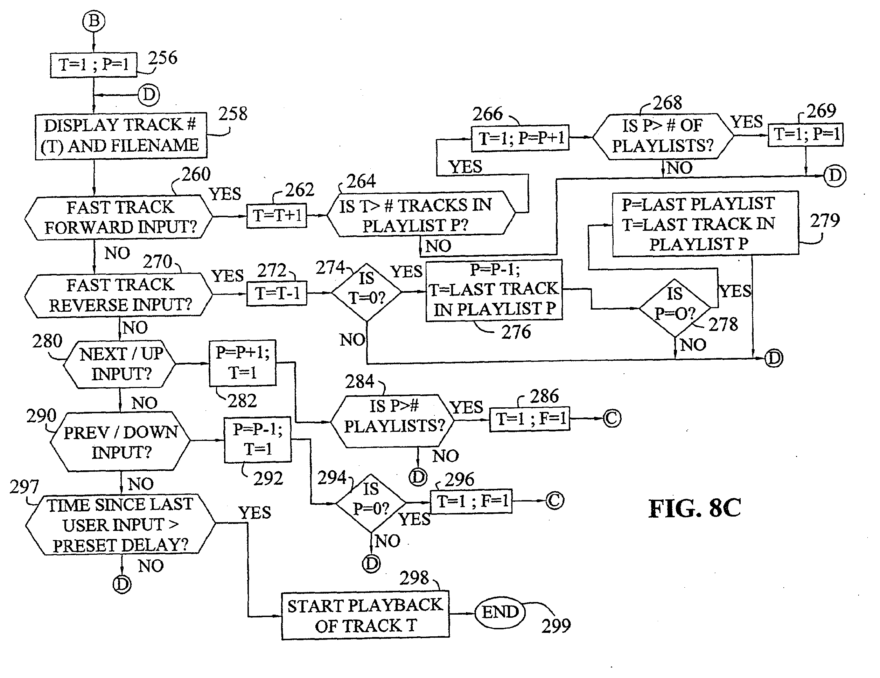

Figs. 8A - 8C show a flowchart illustrating the steps for selecting an audio data file in audio system 20 that is capable of playing audio data files. Method 200 commences at step 202. In step 202, processor 26 determines whether a playlist is available on CD 60. If a playlist is available, method 200 continues at step 256, shown in Fig. 8C. If a playlist is not available, step 204 is executed. In step 204, folder F1 and track T1 are selected by setting variable F equal to 1 and setting variable T equal to 1. In step 206, display 32, 132 displays track number T and the file name or track name associated with track T.

In step 210, processor 26 determines whether the user has selected a fast track forward input by rotating TUNE switch 42, 142 clockwise 46, 146. If fast track forward has been selected, step 212 is completed, else step 220 is completed. In step 212, the next track is selected by incrementing variable T by 1. In step 214, processor 26 determines if variable T is greater than the number of tracks available in folder F. If a next track does not exist, step 214 is true and step 216 is completed, else method 200 continues at step 206. In step 216, the next folder is selected by incrementing variable F by 1 and the first track of folder F is selected by setting variable T equal to 1. In step 218, processor 26 determines if the variable F is greater than the number of available folders. If next folder does not exist, step 218 is true and step 219 is completed, else method 200 continues at step 206. In step 219, selection of the folder and track wraps around to folder F1 track T1 by setting the variable F equal to 1 and setting variable T equal to 1. After step 219 is completed, method 200 continues at step 206.

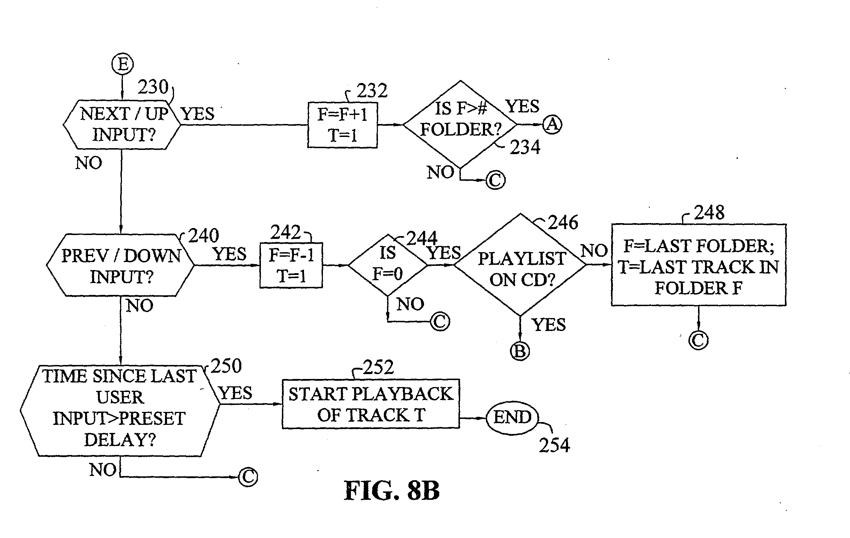

If step 210 determines that a fast track forward input was not received by processor 26, then step 220 is completed. In step 220, processor 26 determines whether the user has selected fast track reverse input by rotating TUNE switch 42, 142 counterclockwise 48, 148. If step 220 is true, then step 222 is completed, else processing continues at step 230, shown in Fig. 8B. In step 222, the previous track is selected by decrementing variable T by 1. In step 224, processor 26 determines whether variable T is equal to 0, a nonexistent track. If step 224 is true, step 226 is completed, else method 200 continues at step 206. In step 226, the last track in the previous folder is selected by decrementing variable F by 1 and by setting variable T to the last track number available in folder F. In step 228, processor 26 determines whether F is equal to 0, a nonexistent folder. If F is true, step 229 is completed, else method 200 continues at step 206. In step 229, wrap around to the last track in the last folder is completed by setting variable F equal to the last folder number and by setting variable T equal to the last track number available in folder F. After step 229 is completed, method 200 continues at step 206.

If step 220 determines that a fast track reverse input was not received by processor 26, then step 230 is completed, shown in Fig. 8B. Step 230 determines whether the user has selected FOLDER UP input by actuating FOLDER UP pushbuttons 52, 152. If step 230 is true, step 232 is completed, else step 240 is completed. In step 232, the first track in the next folder is selected by incrementing variable F by 1 and by setting variable T equal to 1. In step 234, processor 26 determines whether variable F is greater than the number of available folders. If step 232 is true, then method 200 continues at step 202, which will wrap the selection to the first playlist if one is available, or processor 20 will select the first folder if no playlists are available. If step 232 is false, method 200 continues at step 206.

If step 230 determines that the next or up folder inputs were not received, then step 240 is completed. In step 240, processor 26 determines whether the user has selected FOLDER DOWN by actuating FOLDER DOWN pushbuttons 50, 150. If step 240 is true, step 242 is completed, else step 250 is completed. In step 242, the first track of the previous folder is selected by decrementing variable F by 1 and setting variable T equal to 1. In step 244, processor 26 determines whether variable F equals 0, a nonexistent folder. If step 244 is true, step 246 is completed, else method 200 continues at step 206. In step 246, processor 26 determines whether a playlist is available on CD 60. If a playlist is available, method 200 continues at step 256, shown in Fig. 8B, else step 248 is completed. If no playlist is available, in step 248 processor 26 selects the last track in the last folder by setting variable F equal to the last folder number and setting variable T equal to the last track in folder F. After step 248 is completed, method 200 continues at step 206.

If in step 240, it is determined that FOLDER DOWN input was not selected, step 250 is completed. In step 250, processor 26 determines the duration of time since the last user input was received and whether that time was greater than a preset value, for example, 2 seconds. If so, then step 250 is true and step 252 is completed, else step 206 is completed. In step 252, processor 26 initiates playback of track T through audio receiver 22 and then step 254 method 200 is completed and may be restarted again upon the next user input.

Referring to Fig. 8C, if a playlist is available such that method 200 continues at step 256, the first track in the first playlist is selected by setting variable T equal to 1 and variable P equal to 1. In step 258, display 32, 132 displays track number T and the file name or track name associated with track T.

In step 260, processor 26 determines whether the user has selected fast track forward input by rotating TUNE switch 42, 142 clockwise 46, 146. If fast track forward was selected by the user, then step 260 is true and step 262 is completed, else step 270 is completed. In step 262, the next track is selected by incrementing variable T by 1. In step 264, processor 26 determines whether T is greater than the number of tracks available in playlist P. If step 264 is true, step 266 is completed, else method 200 continues at step 258. In step 266, the first track of the next playlist is selected by setting variable T equal to 1 and by incrementing variable P by 1. In step 268, processor 26 determines whether variable P is greater than the number of playlists. If step 268 is true, step 269 is completed, else method 200 continues at step 258. In step 269, the first track of the first playlist is selected by setting variable T equal to 0 and variable P equal to 1. Method 200 continues after step 269 at step 258.

If in step 260 it is determined that fast track forward input was not selected, step 270 is completed. In step 270, processor 26 determines whether the user has selected fast track reverse input by rotating tuner control 42, 142 counterclockwise 48, 148. If step 270 is true, step 272 is completed, else step 280 is completed. In step 272, the previous track is selected by decrementing variable T by 1. In step 274, it is determined whether variable T is equal to 0, a nonexistent track. If step 274 is true, step 276 is completed, else processing continues at step 258. In step 276, the last track in the previous playlist is selected by decrementing variable P by 1 and setting variable T equal to the last track in playlist P. In step 278, processor 26 determines whether P is equal to 0, a nonexistent playlist. If step 278 is true, step 279 is completed, else method 200 continues at step 258. In step 279, selection wraps around to the last track in the last playlist by setting variable P equal to the last playlist and variable T equal to the last track in playlist P. After step 279 is completed, method 200 continues at step 258.

If in step 270, it is determined that fast track reverse input was not selected, step 280 is completed. In step 280, processor 26 determines whether the user has selected FOLDER UP by actuating FOLDER UP pushbuttons 52, 152. If step 280 is true, step 282 is completed, else 290 is completed. In step 282, the first track of the next playlist is selected by incrementing variable P by 1 and setting variable T equal to 1. In step 284, processor 26 determines whether variable P is greater than the number of available playlists. If step 284 is true, step 286 is completed, else method 200 continues at step 258. In step 286, the first track in the first folder is selected by setting variable T equal to 1 and variable F equal to 1. After step 286 is completed, method 200 continues at step 206, shown in Fig. 8A.

If in step 280 it is determined that FOLDER UP was not selected, then step 290 is completed. In step 290, processor 26 determines whether the user has selected FOLDER DOWN input by actuating FOLDER DOWN pushbutton 50, 150. If step 290 is true, step 292 is completed, else step 297 is completed. In step 292, the first track of the previous folder is selected by decrementing variable P by 1 and setting variable T equal to 1. In step 294, processor 26 determines whether variable P is equal to 0, a nonexistent playlist. If step 294 is true, step 296 is completed, else method 200 continues at step 258. In step 296, the first track of the first folder is selected by setting variable T equal to 1 and variable F equal to 1. After step 296 is completed, method 200 continues at step 206, shown in Fig. 8A.

If in step 290 processor 26 determines that FOLDER DOWN was not selected, then step 297 is completed. In step 297, processor 26 determines the duration of time since the last user input was selected and whether that time duration is greater than a preset value, such as 2 seconds. If step 297 is true, then step 298 is completed, else method 200 continues at step 258. In step 298, processor 26 initiates playback of the selected audio data file. In step 299, method 200 is complete.

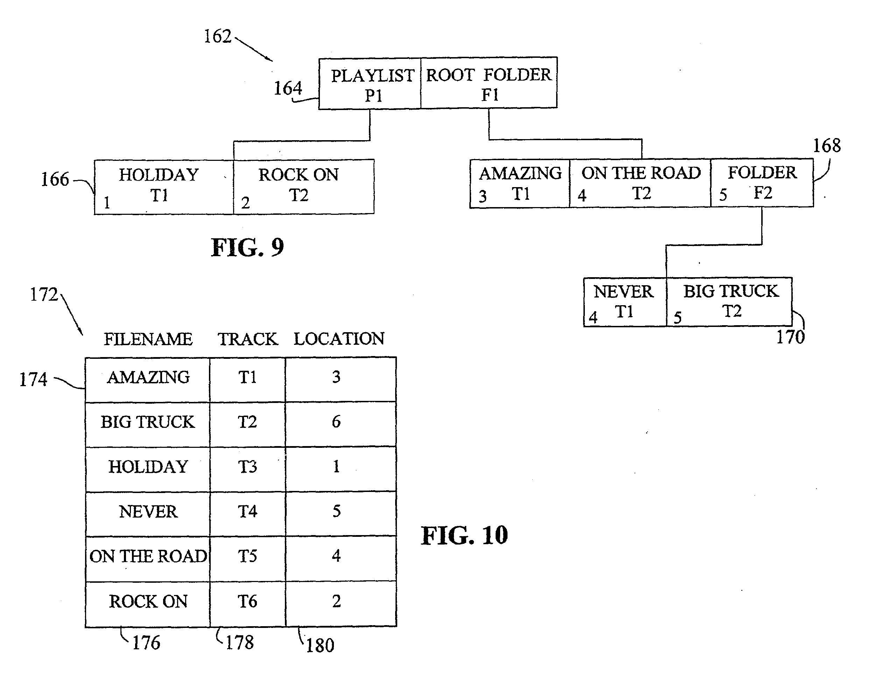

The present invention also provides a method of accessing in audio system 20 an audio data file for which the filename or track name is known. Specifically, processor 26 is capable of generating alphabetical index 172, shown in Fig. 10. Alphabetical index 172 includes all of the audio data files stored on a second exemplary data CD 162, shown in Fig. 9 sorted in order of filename or track name. CD 162 includes root directory 164 having playlist P1 and folder F1. Playlist P1 includes audio data files 166, including track 1 titled HOLIDAY and track 2 titled ROCK ON. Folder F1 includes audio data files 168 and folder F2. Audio data files 168 include track 1 titled AMAZING and track 2 titled ON THE ROAD. Folder F2 includes audio data files 170, including track 1 titled NEVER and track 2 titled BIG TRUCK. As shown in Fig. 10, alphabetical index 172 may include record 174 for each associated audio data file. Each record 174 may include a filename or track name field, track number field 178, and audio data file location pointer 180.

Referring to Figs. 3 and 5, the user selects alphabetical track searching using the alphabetical index by actuating a designated one of input devices 40, 140. Upon selecting the alphabetical index, the selection and display sequence used when stepping through the audio data files will be according to the order of alphabetical index 172 rather than the order of the tracks as they are grouped in playlists and folders on data CD 162.

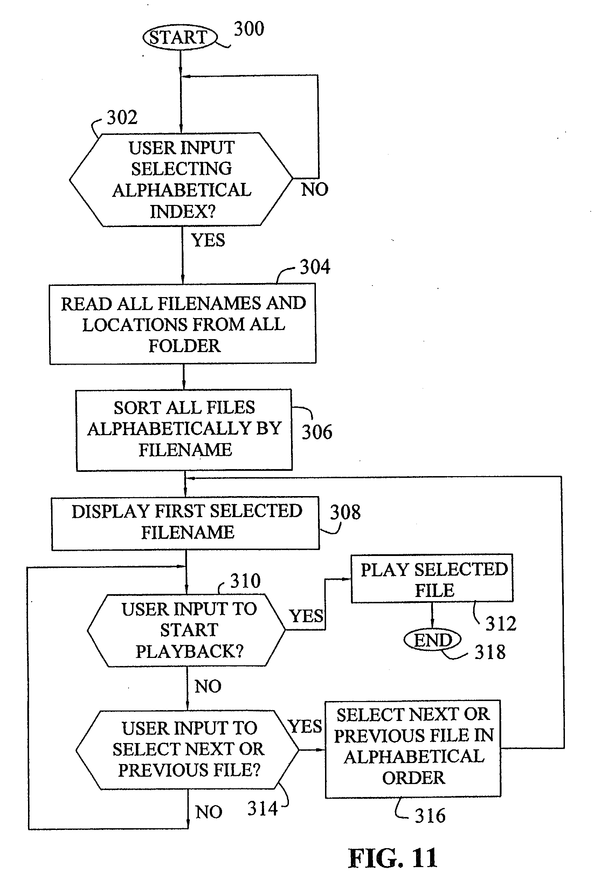

Fig. 11 shows a flowchart illustrating the steps for navigating in alphabetical order the audio data files stored on removable random access media. Method 300 begins at step 302. In step 302, processor 26 determines whether the user has selected alphabetical index 172 for selecting audio data files by actuating the designated one of input devices 40, 140. If the user has selected alphabetical index 172, step 304 is completed, else step 302 is completed until alphabetical index 172 is selected. In step 304, random access media reader 24 reads the filenames or track names and audio data file locations for all audio data files stored on CD 162. In step 306, processor 26 sorts all audio data files alphabetically by filename or track name. In step 308, the first selected filename or track name is displayed. In step 310, processor 26 determines whether a user input to start playback has been received. If playback has been selected, step 312 is completed, else step 314 is completed. In step 312, processor 26 begins playback of the selected audio data file and method 300 is complete at step 318.

If playback has not been selected in step 310, then step 314 is completed. In step 314, processor 26 determines whether a user input to select the next or previous audio data file has been received. If an input has been received and step 314 is true, step 316 is completed, else method 200 continues at step 310. In step 316, processor 26 sequences the selection to the next or previous audio data file according to the order of alphabetical index 172 accordance to the user input determined in step 314. After step 316 is completed, method 200 continues at step 308.

Although described in the exemplary embodiments, it will be understood that various modifications may be made to the subject matter without departing from the intended and proper scope of the invention. Accordingly, it will be understood that other audio devices incorporating an embodiment of the audio system and methods device may fall within the scope of this invention, which is defined by the appended claims.

## Claims

1. An audio system (20) including an audio receiver (22) having a radio tuner (23), a processor (26) coupled to said audio receiver, a random access media reader (24) coupled to said processor, said processor having software enabling access to audio data files stored on a removable random access media (60), and **characterized by** a first switch (42, 142) coupled to said processor and selectively operable in at least two modes, said first switch operable in a first mode for tuning said radio tuner, and operable in a second mode for selecting for playback one of said audio data files.

2. The audio system of Claim 1, **characterized in that** said first switch is operable in said second mode for selectively changing playback from one of said audio data files to another one of said audio data files.

3. The audio system of Claim 1, **characterized in that** movement of said first switch in said second mode selects one of said audio data files.

4. The audio system of Claim 3, **characterized in that** playing of selected one of said audio data files begins upon cessation of movement of said first switch for a preset period of time.

5. The audio system of Claim 3, **characterized in that** movement of said first switch in a first direction (46, 146) in said second mode selects a next one of said audio data files and movement of said first switch in a second direction (48, 148) in said second mode selects a previous one of the said audio data files.

6. The audio system of Claim 5, **characterized in that** said removable random access media includes a compact disc.

7. The audio system of Claim 5, **characterized in that** said random access media reader is capable of accessing tracks stored in groups on said removable random access media, each said track associated with an audio data file.

8. The audio system of Claim 7, **characterized in that** said groups include folders and playlists each having associated audio data files.

9. The audio system of Claim 8, **characterized in that** said selecting for playback said one of said audio data files by moving said first switch, steps selection through said audio data files firstly in order of said audio data files within each said group, and secondly in order of said groups stored on said removable random access media.

10. The audio system of Claim 9, **characterized in that** upon stepping selection between one said audio data file associated with one group to another said audio data file associated with another group, the audio system produces at least one of an audible signal and a visual signal.

11. The audio system of Claim 9, **characterized in that** said selecting for playback said one of said audio data files first steps through said audio data files associated with said playlists and second steps through said audio data files associated with said folders.

12. The audio system of Claim 11, further **characterized by** a second switch (50, 52, 150, 152) for selectively stepping through said playlists and said folders.

13. The audio system of Claim 11, further **characterized by** a display (32, 132) capable of displaying a track number and at least one of a folder name and a playlist name upon stepping to another said folder, said playlist, or said audio data file.

14. The audio system of Claim 11, further **characterized by** a display (32, 132) capable of displaying a track name of said selected one of said audio data files and at least one of a folder name and a playlist name.

15. The audio system of Claim 11, further **characterized by** a display (32, 132) capable of displaying at least one of time of day and a track name of said selected one of the audio data files.

16. The audio system of Claim 7, further **characterized by** data storage (28) coupled to said processor and capable of storing an index (172) of all said audio data files stored on said removable random access media sorted alphabetically by at least one of a track name and a file name.

17. The audio system of Claim 16, **characterized in that** selecting for playback said one of said audio data files by moving said first switch, steps through said audio data files in order of said index.

18. A method for selecting an audio data file in an audio system (20) including an audio receiver (22) having a radio tuner (23), and a random access media reader (24) capable of accessing a plurality of audio data files stored on random access media (60), the method **characterized by** the steps of: enabling a switch (42, 142) upon operation of the random access media reader to be operable for selecting one of the plurality of audio data files; actuating the switch to select one of the plurality of audio data files; and playing the selected one of the plurality of audio data files.

19. The method of Claim 18, **characterized by** the further step of displaying information associated with the selected one of the plurality of audio data files.

20. The method of Claim 18, **characterized by** the further step of ceasing movement of the switch for a preset period of time to initiate said playing of the selected one of the plurality of audio data files.

21. The method of Claim 18, **characterized in that** the plurality of audio data files are ordered in a sequence and said step of actuating the switch includes at least one of actuating the switch in a first direction to select a next audio data file in the sequence and actuating the switch in a second direction to select a previous audio data file in the sequence.

22. The method of Claim 21, **characterized in that** the sequence of the plurality of audio data files is in alphabetical order of at least one of a track name and a file name.

23. The method of Claim 18, **characterized in that** the plurality of audio data files are organized into groups on the random access media, and further **characterized by** the step of receiving a first input from a user interface for stepping selection from one group of the audio data files to another group of the audio data files.

24. The method of Claim 23, **characterized in that** the groups include at least one of playlists and folders.

25. An audio system (20) including a processor (26), a user interface (30) coupled to the processor, an audio receiver (22) coupled to the processor and having a radio tuner (23), a random access media reader (24) coupled to the processor, and **characterized by** software enabling said processor to access audio data files and, upon operation of the random access media reader, enable a switch (42, 142) for user selection of one of the audio data files, and upon operation of said radio tuner, enable said switch for a user selection relating to said radio tuner.

26. The audio system of Claim 25, **characterized in that** said software further enables cessation of movement of said switch to initiate playing of said one of the audio data files.

27. An audio system (20) including a processor (26) and an audio receiver (22) coupled to the processor having a radio tuner (23), a random access media reader (24) coupled to the processor and adapted for accessing audio data files, data storage (28) coupled to the processor, and **characterized by** software enabling said processor to receive at least one of filenames and track names of all the audio data files stored on a removable random access media (60), sort said one of filenames and track names into an alphabetical index (172), and display and access the audio data files in the order of said alphabetical index.

28. The audio system of Claim 27, further **characterized by** a user interface (30) and **characterized in that** said software further enables said processor to generate said alphabetical index upon receiving a first input from said user interface.

29. The audio system of Claim 28, **characterized in that** said software further enables said processor upon receiving a second input from said user interface to step between one of said audio data files and another of said audio data files according to the order of said alphabetical index.

30. The audio player of Claim 29, **characterized in that** said software further enables said processor to associate a sequence number to each said audio data file, said track number corresponding to the order of said audio data files in said alphabetical index.

31. The audio player of Claim 30, **characterized in that** said alphabetical index includes a data structure having a filename (176), sequence number (178), and file pointer (180) for each of said audio data files.

32. The audio player of Claim 27, **characterized in that** said random access media reader is capable of accessing a compact disc.

33. A method of navigating the audio data files stored on removable random access media (60) in an audio system (20) which includes an audio receiver (22) having a radio tuner (23), and a random access media reader (24) adapted for accessing the audio data files, the method **characterized by** the steps of reading at least one of the filenames and track names of all the audio data files stored on the random access media, sorting and storing at least one of filenames and track names in an alphabetical index (172), and displaying and accessing the audio data files in order of the alphabetical index.

34. The method of Claim 33, further **characterized by** the steps of receiving an input from a user interface (30) and, upon receiving the input, stepping between one of said audio data files and another of said audio data files in the order of the alphabetical index.
